# FASCICULE DE BREVET EUROPEEN

(11) **EP 2 254 288 B1**
(45) Date de publication et mention de la délivrance du brevet: **25.12.2013**
(21) Numéro de dépôt: 10161921.1
(22) Date de dépôt: 04.05.2010
(51) Int. Cl.: H04L 12/705, H04L 12/715, H04L 12/717

(54) **Procédé de prévention et d'évitement de boucles en inter-domaine**
Verfahren zur Vermeidung von Schleifen im Inter-Domain Routing
Method for preventing loops in inter-domain routing

(30) Priorité: 22.05.2009 FR 0902498
(43) Date de publication de la demande: 24.11.2010
(73) Titulaire: Alcatel Lucent, 75007 Paris (FR)
(72) Inventeur: Djarallah, Nabil Bachir, 91620, NOZAY (FR); Bui, Dinh Thai, 91620, NOZAY (FR); Pouyallau, Hélia, 91620, NOZAY (FR); Douville, Richard, 91620, NOZAY (FR)
(74) Mandataire: Sciaux, Edmond

(56) Documents cités:
- SHIRAZIPOUR M ET AL: "Reducing TE-LSP setup time by minimizing blockage with the use of pre-reservations during the path computation process" ELECTRICAL AND COMPUTER ENGINEERING, 2009. CCECE '09. CANADIAN CONFERENCE ON, IEEE, PISCATAWAY, NJ, USA, 3 mai 2009 (2009-05-03), pages 610-613, XP031477398 ISBN: 978-1-4244-3509-8

## Description

La présente invention se rapporte au calcul de chemin intra- et inter-domaine dans un contexte de routage de l'information et plus particulièrement à la prévention et à l'évitement des boucles lors du calcul de chemins inter-domaine.

On désigne ci-après par « routage » le mécanisme par lequel des sauts sont progressivement sélectionnés dans un réseau IP pour acheminer des données à partir d'un expéditeur à un ou plusieurs destinataires.

Par ailleurs, on appelle ci-après « domaine» ou « domaine de routage » toute collection d'éléments de réseau au sein d'une sphère commune de gestion d'adresse ou de responsabilité de calcul de chemin. Il s'agit notamment d'une unité normalisée de réseau tels qu'une aire (area ou zones IGP), un système autonome (Autonomous System ou AS) ou une couche (Layer en anglais). Ces domaines peuvent être identifiés à l'aide d'un identifiant de domaine : par exemple, une zone IGP peut être identifiée par l'identifiant de zone, et un AS peut être identifiée par le numéro d'AS (RFC 1930).

Il est à noter que l'expression «calcul de chemins inter-domaine » désigne ici aussi le calcul de chemins inter-carrier en anglais ou inter-opérateur.

On entend ici par « niveau de granularité d'un domaine » le niveau de ce domaine dans une structure hiérarchique d'unités de réseau normalisées. A titre d'exemple, le niveau de granularité d'une aire est inférieur à celui d'un système autonome. Equivalemment, le niveau de granularité d'un système autonome est supérieur à celui d'une aire. Ci-après, si un domaine X est de niveau de granularité inférieur à celui d'un autre domaine Y tel que X est compris dans Y, alors X est dit un sous-domaine de Y.

Le routage sur les réseaux IP est déployé via des éléments ou noeuds de réseaux, dites routeurs, communicants suivant au moins un protocole de routage. Le routage permet de déterminer le prochain saut qu'un paquet de données peut emprunter dans une architecture de réseaux IP. Cette architecture est généralement composée de systèmes autonomes interconnectés et dont chacun est, éventuellement, lui-même découpé en aires. Un système autonome est administré par une seule entité qui a ses propres politiques de routage. On désigne, par entité un Fournisseur d'Accès Internet (FAI), un opérateur de réseau ou plus généralement une entreprise.

On distingue, par rapport aux systèmes autonomes, deux grandes familles de protocoles de routage, à savoir :
- des protocoles internes aux systèmes autonomes: utilisés entre routeurs d'un même système autonome tels que Routing Information Protocol (RIP), Interior Gateway Routing Protocol (IGRP), Enhanced Interior Gateway Routing Protocol (EIGRP), Open Shortest Path First (OSPF), Intermediate System to Intermediate System (IS-IS) ;
- des protocoles externes aux systèmes autonomes : utilisés pour interconnecter des systèmes autonomes tels que Exterior Gateway Protocol (EGP) et Border Gateway Protocol (BGP).

A l'heure actuelle, la famille de protocole BGP, dans ses version iBGP (Interior BGP), eBGP (Exterior BGP), iBGP4 (pour IPv4), BGP6 (pour IPv6), MBGP (pour le multicast) ou MP-BGP (Multi-Protocol BGP), est de loin le protocole le plus utilisé dans le routage inter-systèmes autonomes. Il permet d'apporter aux routeurs les routes inter-domaine en vue d'atteindre des destinations au sein des systèmes autonomes en traversant d'autres systèmes autonomes en fonction, bien sûr, des accords établis entre les entités administrant ces systèmes autonomes.

Cependant, l'émergence des applications à contraintes strictes en terme de qualité de service (QoS), telles que la vidéo à la demande, la visioconférence, la voix sur IP, la télévision sur IP (IPTV), les réseaux privés virtuels (VPN) ou plus généralement les applications distribuées coopératives, ont fait surgir les limites du protocole BGP. On en cite principalement la non-diffusion d'information de QoS. En outre, BGP ne satisfait pas les contraintes d'un protocole de routage inter-domaine de nouvelle génération (les réseaux ad hoc par exemple), comme le passage à l'échelle, la stabilité, la convergence rapide et l'isolation des changements. Pour cela, différentes alternatives ont été récemment proposées pour pallier ces limitations.

A cet égard, l'IETF a crée un groupe de travail axé sur un nouveau concept permettant d'externaliser le calcul de chemin sous contraintes. Ce groupe de travail spécifie une architecture où les opérations de calcul de chemin sont distribuées avec une infrastructure composée d'éléments appelés PCEs (Path Computation Element) (A. Farrel et al., «A Path Computation Element (PCE)-Based Architecture », 2006, RFC4655). Ce calcul distribué repose sur la communication entre les éléments PCE, chacun maitrisant la topologie et la disponibilité des ressources réseaux dans son domaine de responsabilité. Il devient ainsi possible de calculer des chemins inter-domaine sous contraintes garantissant une QoS de bout en bout.

La tâche capitale dans cette garantie de QoS de bout en bout réside particulièrement dans la prévention et l'évitement des boucles inter-domaine. En effet, une boucle de routage augmente inutilement le trafic sur un chemin donné. Il pourra en résulter une congestion et des paquets devront être détruits pour y remédier. Par conséquent, en plus de la perte des paquets, elle impacte les performances bout en bout, violant ainsi la qualité de service.

Selon l'usage courant, une boucle de routage est une situation dans laquelle un paquet de données passe de manière répétée par la même interface de sortie d'un routeur/commutateur. On distingue, dans la littérature, différentes solutions techniques permettant de prévenir et d'éviter les boucles de routage lors du calcul de chemins. Mais, toutes ces solutions demeurent partielles et ne résolvent pas efficacement ce problème.

En effet, des algorithmes de calcul de chemin soumis à plusieurs contraintes évitant les boucles de routage existent. Mais, ces algorithmes ne peuvent être appliqués dans le cas inter-domaine, du fait de contraintes de confidentialité, d'extensibilité et d'autonomie des domaines. Les informations nécessaires à un routage inter-domaine optimal (tel que la topologie des différents domaines interconnectés jusqu'à la granularité du lien ou de l'interface de sortie des routeurs/commutateurs.) au sein d'une pluralité de domaines administrés par des organisations concurrentes, ne sont généralement pas disponibles en dehors de chaque domaine.

Le document US 2007/0214275, par exemple, décrit une méthode d'évitement de boucle. Cette méthode se base sur la diffusion de certaines informations aux routeurs évitant les boucles de routage inter-domaine. Cette solution détecte parfois des fausses boucles, ne résolvant, ainsi, que partiellement ce problème.

La solution BRPC (Backward Recursive PCE-based Computation), définie dans RFC 5441 de l'IETF, suppose que la chaine de PCE est connue d'avance.

Les procédés et systèmes connus sont imparfaits, notamment en raison de la restriction de leur champ d'application à l'intra-domaine ou de leurs inefficacités (e.g. détection de fausses boucles).

Un objet de la présente invention est de remédier aux inconvénients précités.

Un autre objet de la présente invention est de prévenir et d'éviter les boucles en inter-domaine tout en respectant les contraintes de confidentialité entre les domaines.

Un autre objet de la présente invention est de garantir une bonne stabilité au routage inter-domaine soumis à plusieurs contraintes en évitant les boucles.

Un autre objet de la présente invention est de veiller à la QoS de bout en bout via une pluralité de domaines en évitant les boucles.

Un autre objet de la présente invention est qu'une entité de calcul de chemin sélectionne la ou les prochaines entités de calcul de chemin impliquées dans le calcul de bout-en-bout en tenant compte des entités de calcul précédemment impliquées.

Un autre objet de la présente invention est d'associer le protocole de communication entre les entités de calcul de chemin aux mécanismes de détection de boucles.

Un autre objet de la présente invention est de spécifier l'échange des informations nécessaires et suffisantes dans une architecture basée sur des entités de calcul de chemin pour prévenir et éviter les boucles de routage.

A cette fin, l'invention se rapporte, selon un premier aspect, à un procédé de prévention et d'évitement de boucle inter-domaine dans une pluralité de domaines supportant une architecture d'entités de calcul de chemin incluant au moins une entité de calcul de chemin par domaine et au moins un requérant de calcul de chemin appartenant à un desdits domaines et requérant, par le biais d'une requête de calcul de chemin, la connexion à une destination au sein desdits domaines, ledit requérant de calcul de trajet et lesdites entités de calcul de chemin étant communicants entre eux par le biais d'au moins un protocole définissant ladite requête, procédé qui se **caractérise en ce qu'**une entité de calcul de chemin, dite entité courante :
- reçoit une requête de calcul de chemin comportant une information spécifiant un critère de détection de boucles inter-domaine en indiquant un niveau de granularité desdits domaines et une information spécifiant une liste des domaines présentant ledit niveau de granularité successivement traversés par la requête ;
- sélectionne une prochaine entité de calcul de chemin à laquelle ladite requête doit être transmise en fonction dudit critère de détection de boucles inter-domaine et de ladite liste des domaines de manière à empêcher toute répétition d'une séquence de domaines présentant ledit niveau de granularité de ladite liste.

Avantageusement, l'étape de sélection de la prochaine entité comprend les tests suivants:

**Si**
**i.** l'identifiant du domaine auquel est associée la courante entité de calcul de chemin et l'identifiant du domaine auquel est associée la candidate à la prochaine entité de calcul de chemin sont comprises dans la liste des domaines successivement traversés ; et
**ii.**le domaine auquel est associée la courante entité de calcul de chemin et le domaine auquel est associée la candidate à la prochaine entité de calcul de chemin présentent ledit niveau de granularité ;

**Tel que**
**a.** l'identifiant du domaine auquel est associée la courante entité de calcul de chemin est différent de l'identifiant du domaine auquel est associée la candidate à la prochaine entité de calcul de chemin; et
**b.** l'identifiant du domaine auquel est associée la courante entité de calcul de chemin précède dans la liste des domaines successivement traversés l'identifiant du domaine auquel est associée la candidate à la prochaine entité de calcul de chemin

**Alors**
cette candidate à la prochaine entité de calcul de chemin n'est pas le meilleur prochain saut d'entité de calcul de chemin.

**Sinon**
cette candidate à la prochaine entité de calcul de chemin peut être le prochain saut d'entité de calcul de chemin.

Ces tests sont appliqués successivement à toutes les entités de calcul de chemin candidates potentielles au prochain saut.

Avantageusement, lorsque la confidentialité des domaines en terme de topologie de réseaux est exigée, les identifiants des sous-domaines, par rapport au niveau de granularité indiqué dans la requête, contenus dans la liste des domaines présentant le niveau de granularité successivement traversés par la requête peuvent être, soit supprimés, soit codés lors du routage de la requête depuis leur domaine à un autre domaine de même niveau de granularité ou supérieur (le passage inter-domaine, dans ces cas de confidentialité, se réalise au même niveau de granularité).

Avantageusement, la présente invention est applicable dans un contexte intra-domaine et inter-domaine (intra- ou inter-opérateur). La présente invention peut être notamment déployée dans une architecture PCE.

L'invention propose, selon un deuxième aspect, un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

Certains aspects de l'invention partent du constat que, dans une architecture de routage inter-domaine basée sur l'externalisation du calcul de chemins sous contraintes, le calcul distribué du chemin, supposé optimal, résulte de la coopération de plusieurs entités de calcul de chemin. Chacune permet de déterminer localement le ou les tronçon(s) de chemin optimal(aux) de son domaine de responsabilité ainsi que le ou les prochain(s) saut(s) d'entité de calcul de chemin. Cependant, ce prochain saut, estimé localement au niveau de chaque entité de calcul de chemin, peut être particulièrement difficile à prévoir, surtout lorsque chacune des entités possède une vue située et non globale. Dès lors et malgré un calcul optimal au niveau de chaque entité de calcul de chemin (local), des boucles de routage peuvent apparaître en raison de l'absence d'une vue globale sur les résultats déjà obtenus par les autres entités.

Une idée à la base de l'invention est de prévenir les situations dans lesquelles un paquet de données passerait d'une manière répétée par une même séquence (2 ou plus) de domaines d'un réseau.

D'autres caractéristiques et avantages de l'invention apparaîtront plus clairement et de manière concrète à la lecture de la description ci-après de modes de réalisation préférés, laquelle est faite en référence aux dessins annexés dans lesquels :
- la figure 1 illustre schématiquement le contexte d'application d'un mode de réalisation de la présente invention,
- la figure 2 illustre schématiquement une représentation fonctionnelle, non limitative du corps d'une requête de calcul de chemin selon un mode de réalisation de l'invention.

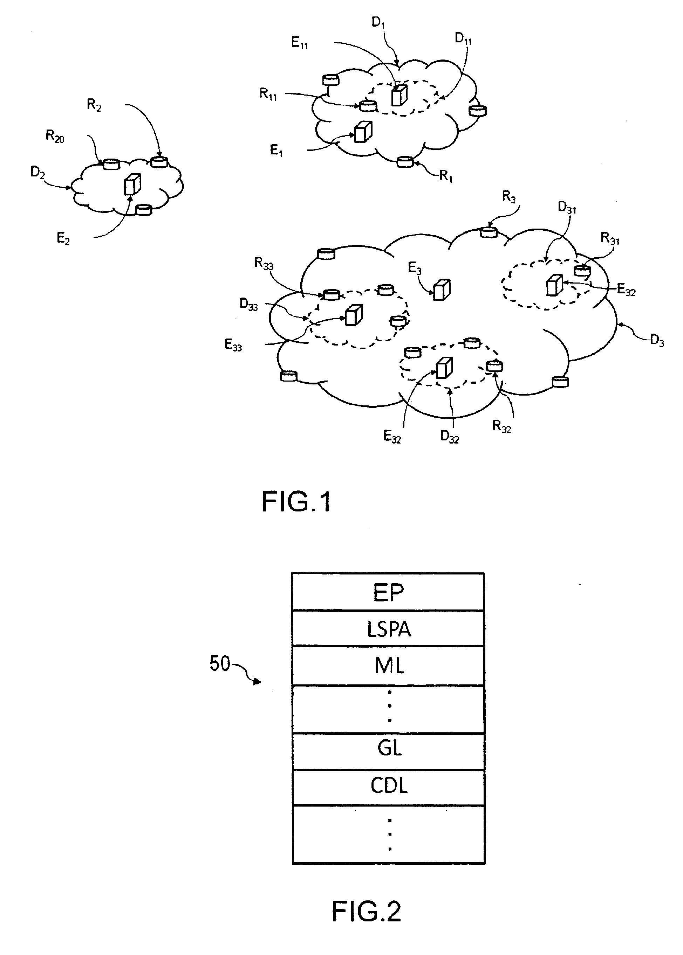

Sur la figure 1 est représentée une pluralité de systèmes autonomes D₁-D₃ supportant une architecture d'entités de calcul de chemin. Un système autonome D₃ peut comprendre une pluralité d'aires D₃₁, D₃₂ et D₃₃.

Une architecture de calcul de chemin comprend:
- des entités E₂, E₁, E₁₁, E₃, E₃₁, E₃₂, E₃₃ de calcul de chemin : elles sont, par exemples, des composants, des applications ou des noeuds de réseau qui sont capables de calculer un chemin sur un réseau sur la base de sa spécification (notamment, sa topologie et ses ressources) et des contraintes de calcul ;
- des requérants potentiels R₂, R₁, R₁₁, R₃, R₃₁, R₃₂, R₃₃ de calcul de chemin : toute application cliente qui demande à une entité E de calcul de chemin d'effectuer un calcul de chemin ; et
- éventuellement d'autres blocs fonctionnels non représentés.

Dans une architecture d'entités de calcul de chemin, un requérant R de calcul de chemin est une application cliente qui demande qu'un calcul de chemin soit effectué par une entité E de calcul de chemin. Un requérant R de calcul de chemin est en général un routeur de tête (head-end) ou plus généralement un serveur. L'entité E de calcul de chemin peut être, à titre d'exemples non-limitatifs, un serveur ou un routeur au sein d'un domaine.

Tel que le montre la figure 1, un système autonome peut comprendre une pluralité de requérants R de calcul de chemin. De même, un système autonome peut comprendre, en fonction de sa taille, une ou plusieurs entités E de calcul de chemin. Un large domaine D₃ de transit, composé de plusieurs aires D₃₁ D₃₂ D₃₃, peut comprendre une entité E de calcul de chemin par aire ; E₃₁, E₃₂.et E₃₃, en plus de l'entité E₃ de calcul de chemin qui lui est associé.

Un requérant R de calcul de chemin comprend un bloc de communication chargé
i. d'envoyer des requêtes Req de calcul de chemin vers une entité E de calcul de chemin ; et
ii. de recevoir des réponses Rep de calcul de chemin depuis une entité E de calcul de chemin.

Afin de pouvoir traiter une requête Req reçue, une entité E de calcul de chemin est, de préférence, pourvue:
- d'une base de données comprenant la topologie d'un segment du réseau dont l'entité de calcul est responsable, les ressources et les informations d'ingénierie de trafic (TED pour Traffic Engineering Database). Cette base de données peut être alimentée par les protocoles de routage intradomaine (OSPF-TE, ou IS-IS-TE par exemples) et/ou par d'autres moyens (par exemples des bases de données réseau ou des routes apportés par BGP avant qu'il sélectionne le meilleur chemin) ;
- d'un module de calcul de chemin contraint équipé d'une pluralité d'algorithmes de calcul ; et
- d'un bloc de communication chargé de la communication avec les requérants R de calcul de chemin demandant le calcul d'un chemin et les autres entités E de calcul de chemin, éléments de l'architecture d'entités de calcul de chemin totale.

La communication des requêtes Req de calcul de chemin d'un requérant R de calcul de chemin vers une entité E de calcul de chemin ou celle des réponses Rep d'une entité E de calcul de chemin vers le requérant R de calcul de chemin sont réalisé par le biais de sessions d'un protocole P. A titre d'exemple non-limitatif, dans le cas particulier d'une architecture PCE, le protocole P s'identifie au protocole PCEP (Path Computation Element Protocol) définie dans RFC 5440 (JP. Vasseur et al., « Path Computation Element (PCE) Communication Protocol (PCEP) », 2009).

A titre d'exemple, le requérant R₂ de calcul de chemin, appartenant au domaine D₂, requière la connexion sous certaines contraintes (bande passante, taux d'erreur et d'autres métriques d'ingénierie de trafic par exemples) à un noeud compris dans un domaine D non représenté sur la figure 1. Pour cela, le requérant R₂ de calcul de chemin transmet à l'entité E₂ de calcul de chemin une requête Req de calcul de chemin. Le chemin reliant le requérant R₂ de calcul de chemin au point de destination désiré inclut, notamment, des domaines intermédiaires ayant des politiques d'administration différentes. Le calcul du chemin reliant le requérant R₂ au point de destination désiré est fait par l'entité E₂ de calcul de chemin s'il a suffisamment de connaissance sur la topologie des domaines à traverser pour arriver à la destination désirée. Sinon, ce calcul de trajet est distribué progressivement sur les entités E de calcul de chemin par domaines, chacun ayant une vue détaillée sur son domaine de responsabilité. Une entité E de calcul de chemin sollicitée par une autre entité E de calcul de chemin contribue au calcul du chemin. Ensuite, elle désigne, à son tour, la ou les prochaine(s) entité(s) E de calcul de chemin, appelée(s) entité(s) de calcul candidate(s), si elle-même ne peut fournir directement le chemin menant à la destination souhaitée.

La requête Req de calcul de chemin de bout-en-bout est traitée par plusieurs entités E de calcul de chemin, chacune calculant une section du chemin traversant le segment de réseau propre à son domaine de responsabilité.

On se reporte, maintenant, à la figure 2. Une requête selon le protocole P comprend un entête commun et un corps de longueur variable. Le corps 50 d'une requête Req de calcul de chemin comprend une pluralité d'objets. On en cite, à titre d'exemple,
- le point de destination EP (End Point) ;
- un ensemble d'objet LSPA spécifiant les attributs tels que la priorité d'établissement et de maintien ;
- la bande passante requise ;
- le temps de retard toléré ; et
- une liste de métriques indiquant les métriques à optimiser.

Tel que le montre l'exemple de la figure 2, une extension du protocole PCEP est faite. Il s'agit de deux nouveaux objets du protocole PCEP ajoutés au corps 50 de la requête Req de calcul de chemin :
- un premier objet GL (Granularity Level) spécifiant le critère de détection de boucles en indiquant le niveau de granularité (ou niveau de résolution) où la détection de boucle se réalise: aire, système autonome, couche ou toute autre unité de réseau normalisée ; et
- un second objet CDL (Crossed Domains List) comprenant la liste ordonnée des identifiants des domaines successivement traversés par la requête Req de calcul de chemin.

Le premier objet GL décrit le niveau de détail auquel le mécanisme de détection de boucle inter-domaine devrait opérer (aire, système autonome, couche, noeud, interface, lien ou toute autre unité de réseau normalisée) Cet objet du protocole P indique l'interprétation de la boucle selon le requérant R de calcul de chemin, émetteur de cette requête. Il permet aussi de configurer la détection de boucle de manière flexible.

Un domaine est défini par un seul identifiant dont la complexité et la forme dépend du type de l'unité. Plus généralement, l'identifiant d'un domaine est tout moyen permettant d'identifier d'une façon unique ce domaine (cet identifiant peut être, par exemple, une chaine alphanumérique, une adresse, un nom ou un numéro).

Il est à noter que l'identifiant d'un domaine peut paraître plus qu'une fois dans l'objet CDL.

Avant de transmettre une requête Req de calcul de chemin vers une autre entité E de calcul de chemin ou répondre à un requérant R de calcul de chemin, une entité E de calcul de chemin fait parvenir automatiquement l'identifiant du domaine auquel elle est associée à la requête Req sans que celle-ci ait à en faire la recherche. Cette opération est communément désignée, en anglais, par le vocable information push. Il en résulte la construction automatique du CDL à l'aide des entités E de calcul de chemin associés aux domaines traversés au fur et à mesure de la propagation de la requête Req qui est orientée par les entités E de calcul de chemin.

En référence de nouveau à la figure 1, on part de l'hypothèse qu'une session selon le protocole P est ouverte et/ou initialisée entre le requérant R₂ de calcul de chemin et l'entité E de calcul de chemin qui lui est associé, supposé l'entité E₂. Le requérant R₂ de calcul de chemin transmet à l'entité E₂ de calcul de chemin une requête Req dont le corps comprend :
- une destination à atteindre, située dans un domaine non représenté sur la figure 1 ;
- un niveau de granularité GL, supposé dans cet exemple, « AS » (pour Autonomous System) ;
- un CDL vide ; et
- éventuellement d'autres objets du protocole P.

| Destination |
|---|
| ... |
| GL= « AS » |
| CDL= {} |

Dès réception de cette requête, l'entité E₂ de calcul de chemin interroge sa TED et sa table de routage inter-entité E de calcul de chemin pour déterminer la liste des prochains sauts Eᵢ candidats permettant a priori de mener à la destination requise.

Sauf spécification particulière, le module de calcul de chemin contraint de l'entité E₂ de calcul de chemin distingue et privilégie le ou les prochain(s) saut(s) optimal(aux), satisfaisant les contraintes indiqués dans la requête Req pour le considérer comme le ou les meilleur(s) prochain(s) saut(s). Supposons que l'entité E₁ est sélectionnée comme prochain saut. Dans ce cas, l'entité E₂ de calcul de chemin fait parvenir l'identifiant D₂_id du domaine D₂, auquel elle est associée, à la requête Req. Ensuite, l'entité E₂ de calcul de chemin transmet la requête Req à l'entité E₁ de calcul de chemin.

La requête Req transmise par l'entité E₂ de calcul de chemin à l'entité E₁ de calcul de chemin a la forme suivante :

| Destination |
|---|
| ... |
| GL= « AS » |
| CDL= {(AS)D₂_id} |

Où D₂_id est l'identifiant du domaine D₂.

Dès réception de ce message par l'entité E₁ de calcul de chemin, cette dernière :
- interroge sa table de routage inter-entité E de calcul de chemin et sa TED afin d'avoir la liste des prochains sauts favorisant l'atteinte de la destination indiquée dans la requête Req de calcul de chemin ;
- établit à l'aide de son module de calcul la liste ordonnée des entités E de calcul de chemin décrétées associées aux routes optimales possibles;
- applique une feuille de route à la liste établie des entités E de calcul de chemin pour sélectionner un prochain saut d'entité de calcul de chemin;
- complète le champ CDL de la requête Req selon le résultat de l'application de la feuille de route ;
- transmet la requête Req modifiée à la ou les prochaine(s) entité(s) E de calcul de chemin satisfaisant la feuille de route ou répond au requérant R de calcul de chemin émetteur de la requête Req de calcul de chemin.

La feuille de route comprend une série de test dont le but est d'éviter une éventuelle boucle inter-domaine. Ces tests comprennent le principe suivant :

### SI « condition(s) rempli(es) », ALORS «Action(s)», SINON « Action(s) »

Supposant que la liste établie par E₁, d'entités E de calcul de chemin, candidates au prochain saut d'entité E de calcul de chemin, comprend {E₃, E₆, E₄} (E₆, E₄ ne sont pas représentés sur la figure 1). L'entité E₁ de calcul de chemin procède aux tests suivant :
- **Si**: **i.** l'identifiant D₁_id du domaine D₁ et l'identifiant D₃_id du domaine D₃ sont comprises dans CDL de la requête Req ; et
**ii.** le domaine D₁ associé à l'entité E₁ de calcul de chemin et le domaine D₃ associé à l'entité E₃ de calcul de chemin sont du même GL (Granularity Level) « AS » ;
- tel que: **a.** l'identifiant D₁_id du domaine D₁ associé à l'entité E₁ de calcul de chemin est différent de l'identifiant D₃_id du domaine D₃ associé à l'entité E₃ de calcul de chemin; et
**b.** l'identifiant D₁_id du domaine D₁ associé à l'entité E₁ de calcul de chemin précède dans CDL l'identifiant D₃_id du domaine D₃ associé à l'entité E₃ de calcul de chemin
- **Alors**: l'entité E₃ de calcul de chemin n'est pas le meilleur prochain saut d'entité E de calcul de chemin (c'est-à-dire, elle crée une boucle de routage).
- **Sinon**: L'entité E₃ de calcul de chemin peut être le prochain saut d'entité E de calcul de chemin.

Ce précédent test sera appliqué à la candidate suivante jusqu'à la fin de la liste de candidates ou la feuille de route soit satisfaite.

L'application de la feuille de route sur une liste d'entités E de calcul de chemin candidates au prochain saut peut se mettre sous la forme suivante :
**Pour** toutes les entités E de calcul de chemin candidates
**SI** « condition(s) rempli(es) », **ALORS** «Action(s)», **SINON** « Action(s) »
**Fin Pour**

En variante, l'application de la feuille de route sur une liste d'entités E de calcul de chemin candidates au prochain saut peut se mettre sous la forme suivante :
**Tant_que** « condition(s) »
**SI** « condition(s) rempli(es) », **ALORS** «Action(s)», **SINON** « Action(s) » **Fin Tant_que**

Supposons que l'entité E₄ de calcul de chemin satisfait la feuille de route précédente. Alors, l'entité E₁ de calcul de chemin modifie le CDL de la requête Req de calcul de chemin de la manière suivante, tout autre objet du protocole P de la requête Req étant inchangé :

| Destination |
|---|
| ... |
| GL= « AS » |
| CDL= {(AS)D₂_id(AS)(AS)D₁_id} |

Ensuite, cette requête Req est transmise de l'entité E₁ de calcul de chemin vers l'entité E₄ de calcul de chemin.

Ainsi, la requête Req se propage entre les entités E de calcul de chemin jusqu'à la dernière entité E de calcul de chemin du domaine auquel appartient la destination réclamée par la requête Req.

Plus généralement, supposons une entité Eⁱ (i est le rang de cette entité dans le chemin de routage d'une requête Req de calcul de chemin) de calcul de chemin reçoit une requête Req dont le champ GL et CDL comprennent respectivement :
- GL= « X », où X est une unité de réseau normalisée;
- CDL = {(X)X¹_id(X)X²_id ... (X)Xⁱ⁻¹_id} ou X^{k}_id est l'identifiant du k^{ème} domaine traversé par la requête Req.

Alors, Eⁱ établie en local la liste finie ={Eₐ, E_{b}, E_{c},...} dont chacune est candidate au(x) prochain(s) saut(s) Eⁱ⁺¹ avec des niveaux de satisfaction décroissants des contraintes spécifiées dans la requête Req. Cette liste est obtenue en utilisant la TED et/ou la table de routage inter-entité E de calcul de chemin et/ou les moyens de calcul qui sont à la disposition de l'entité Eⁱ de calcul de chemin.

En parcourant de gauche à droite la liste des entités E candidates au Eⁱ⁺¹, c'est-à-dire l'entité E de calcul de chemin qui succède la courante entité E de calcul de chemin, Eⁱ applique la feuille de route à au moins le premier élément de la liste de candidates comme suit :
- **Si**: **i.** l'identifiant Dⁱ_id du domaine Dⁱ et l'identifiant Dⁱ⁺¹_id du domaine Dⁱ⁺¹ sont comprises dans CDL de la requête Req ; et **ii.** le domaine Dⁱ auquel est associée Eⁱ et le domaine Dⁱ⁺¹ auquel est associée Eⁱ⁺¹ sont du même GL (Granularity Level) « X » qui est indiqué dans Req
- tel que: **a.** l'identifiant Dⁱ_id du domaine Dⁱ auquel est associée Eⁱ est différent de l'identifiant Dⁱ⁺¹_id du domaine Dⁱ⁺¹ auquel est associée Eⁱ⁺¹ ; et **b.** l'identifiant Dⁱ_id du domaine Dⁱ auquel est associée Eⁱ précède dans CDL l'identifiant Dⁱ⁺¹_id du domaine Dⁱ⁺¹ auquel est associée Eⁱ⁺¹

- **Alors**: Eⁱ⁺¹ n'est pas le meilleur prochain saut E (c'est-à-dire, Eⁱ⁺¹ crée une boucle de routage).
- **Sinon**: L'entité Eⁱ⁺¹ de calcul de chemin est un éventuel prochain saut d'entité E de calcul de chemin.

Une formulation plus compacte de cette feuille de route peut se mettre comme suit :
**Si** D_id(Eⁱ) et D_id(Eⁱ⁺¹) ∈ CDL et D_GL(Eⁱ⁺¹)=D_GL(Eⁱ) ∈ GL
**Tel que**
   - D_id(Eⁱ) ≠ D_id(Eⁱ⁺¹)
   - D_id(Eⁱ) précède D_id(Eⁱ⁺¹) dans CDL_{reçu}
**Alors**
   Eⁱ⁺¹ n'est pas la meilleure candidate (Eⁱ⁺¹ crée une boucle).
**Sinon**
   Eⁱ⁺¹ peut être le prochain saut.
D_id(X) et D_GL(X) désignent, respectivement, l'identifiant du domaine X et le niveau de granularité du domaine X. CDL_{reçu} est la liste des domaines successivement traversés par la courante entité Eⁱ de calcul de chemin.

Dès qu'une Eⁱ⁺¹ parmi la liste de candidates est décrétée adéquate, CDL est modifié et Req est destinée au Eⁱ⁺¹ sélectionnée.

Si l'entité Eⁱ⁺¹ de calcul de routage retenue, c'est-à-dire celle qui ne crée pas une boucle de routage, est associée à une unité de réseau normalisée comprise dans X (un sous-domaine de X), CDL est modifiée comme suit :
CDL = {(X)X¹_id(X)X²_id ... (X)Xⁱ_id(X) Xⁱ_id (subX)subXₖ_id}
où subXₖ_id est l'identifiant du sous-domaine k du domaine X (tel que le cas de l'identifiant d'une aire appartenant à un système autonome).

Plus généralement, si l'entité Eⁱ⁺¹ de calcul de chemin retenue est associée à un sous-domaine d'un sous-domaine du domaine « X », spécifié par GL, CDL est modifiée comme suit :
CDL = {(X)X¹_id(X)X²_id ... (X)(X)Xⁱ_id(X)Xⁱ_id (subX)subXₖ(subsubX)subsubXₘ_id}
où subsubXₘ_id est l'identifiant du sous-domaine subsubXₘ qui est un sous-domaine du sous-domaine subXₖ et qui est son tour un sous-domaine du domaine Xⁱ.

Dans le cas ou le domaine traversé correspond à un sous-domaine du celui spécifié dans GL, il sera désigné dans CDL par un couple d'identifiant ; l'identifiant de son domaine suivi de son propre identifiant. A titre d'exemple, si :
- l'objet GL spécifie que le domaine est «AS », pour Autonomous System ; et
- le domaine traversé est une aire Aₙ appartenant au système autonome AS d'identifiant ASₖ
alors, cette aire est désigné dans CDL par (AS)ASₖ(Aire)Aₙ.

Cette feuille de route permet de conclure la décision de routage après avoir déterminé les différentes routes optimales possibles.

La condition a de la feuille de route (notamment l'identifiant du domaine Dⁱ auquel est associée Eⁱ est différent de l'identifiant du domaine Dⁱ⁺¹ auquel est associée Eⁱ⁺¹) prend en considération le cas ou il y a plus qu'une entité E de calcul de chemin au sein d'un même domaine.

La transmission des identifiants ou plus généralement des informations concernant la topologie d'un certain domaine à un autre pourrait représenter une violation des règles de confidentialité. Pour cela, suivant un mode de réalisation, les identifiants des sous-domaines, par rapport à GL, sont automatiquement supprimés si la requête Req est routée vers un domaine de type GL ou supérieur. Autrement dit, si Eⁱ⁺¹ retenue est associée à un domaine présentant un niveau de granularité supérieur ou égal à celui de Eⁱ, les identifiants des sous-domaines de Eⁱ sont supprimés dans CDL.

Dans un autre mode de réalisation, lors du routage d'un domaine présentant le niveau de granularité spécifié dans la requête à un autre domaine, les identifiants des sous-domaines du premier domaine sont codés de sorte que seul ce dernier qui peut décoder ces identifiants. Pour cela, un domaine défini sa propre procédure de codage/décodage des identifiants de ces sous-domaines.

A titre d'exemple, lorsque une requête Req de calcul de chemin indiquant un niveau de granularité « AS » est routée à partir d'un système autonome A vers un système autonome B, les identifiants des aires appartenant au système autonome A et figurants dans CDL sont soit supprimés soit codés, étant entendu qu'une requête de calcul de chemin ne peut pas être directement routée à partir d'une aire appartenant à un domaine d'un opérateur X vers un domaine d'un opérateur Y et vice-versa.

Il est à noter que lorsqu'il n'y a aucune entité E de calcul de chemin qui satisfait la feuille de route, un message est retourné au requérant R de calcul de chemin, émetteur de la requête Req, par la courante entité E de calcul de chemin pour l'informer que sa requête ne peut être satisfaite.

Il est à noter aussi que dans le cas où une entité de calcul est simultanément associée à deux domaines (notamment dans le cas de domaines chevauchants), un identifiant virtuel de domaine peut être associé à cette entité.

La présente invention trouve notamment son application dans l'interconnexion des domaines sous la gestion des FAIS.

Suivant un mode de réalisation, l'architecture de calcul de chemins est une architecture PCE dans laquelle :
- l'entité E de calcul de chemin est un élément de calcul de chemin (PCE : Path Computation Element) ;
- le requérant R de calcul de chemin est un client de calcul de chemin (PCC : Path Computation Client) ;
- le protocole P est le protocole PCEP (Path Computation Element Protocol).

La présente invention peut être déployée dans une architecture PCE, une version améliorée de celle-ci, ou toute autre architecture qui lui est équivalente.

## Revendications

1. Procédé de prévention et d'évitement de boucle inter-domaine dans une pluralité de domaines supportant une architecture d'entités de calcul de chemin incluant au moins une entité (E) de calcul de chemin par domaine (D) et au moins un requérant (R) de calcul de chemin appartenant à un desdits domaines (D) et requérant, par le biais d'une requête de calcul de chemin, la connexion à une destination au sein desdits domaines (D), ledit requérant de calcul de trajet et lesdites entités (E) de calcul de chemin étant communicants entre eux par le biais d'au moins un protocole définissant ladite requête, ce procédé étant **caractérisé en ce qu'**une entité (E) de calcul de chemin, dite entité courante :
- reçoit une requête de calcul de chemin comportant une information spécifiant un critère de détection de boucles inter-domaine en indiquant un niveau de granularité desdits domaines et une information spécifiant une liste des domaines présentant ledit niveau de granularité successivement traversés par la requête ;
- sélectionne une prochaine entité (E) de calcul de chemin à laquelle ladite requête doit être transmise en fonction dudit critère de détection de boucles inter-domaine et de ladite liste des domaines de manière à empêcher toute répétition d'une séquence de domaines présentant ledit niveau de granularité de ladite liste.

2. Procédé selon la revendication 1, **caractérisé en ce que** le niveau de granularité est une unité de réseau normalisée de type un système autonome ou une aire.

3. Procédé selon l'une quelconque des revendications précédentes, **caractérisé en ce que** l'étape de sélection de la prochaine entité comprend les tests suivants:
**Si**
i. l'identifiant du domaine auquel est associée la courante entité (E) de calcul de chemin et l'identifiant du domaine auquel est associée la candidate à la prochaine entité (E) de calcul de chemin sont comprises dans la liste des domaines successivement traversés ; et
**ii.** le domaine auquel est associée la courante entité (E) de calcul de chemin et le domaine auquel est associée la candidate à la prochaine entité (E) de calcul de chemin présentent ledit niveau de granularité ;
**Tel que**
**a.** l'identifiant du domaine auquel est associée la courante
entité (E) de calcul de chemin est différent de l'identifiant du domaine auquel est associée la candidate à la prochaine entité de calcul de chemin; et
**b.** l'identifiant du domaine auquel est associée la courante entité de calcul de chemin précède dans la liste des domaines successivement traversés l'identifiant du domaine auquel est associée la candidate à la prochaine entité de calcul de chemin
**Alors** cette candidate à la prochaine entité de calcul de chemin n'est pas le meilleur prochain saut d'entité de calcul de chemin.
**Sinon** cette candidate à la prochaine entité de calcul de chemin
peut être le prochain saut d'entité de calcul de chemin.

4. Procédé selon l'une quelconque des revendications précédentes, **caractérisé en ce que** l'étape de sélection de la prochaine entité comprend les tests suivants : 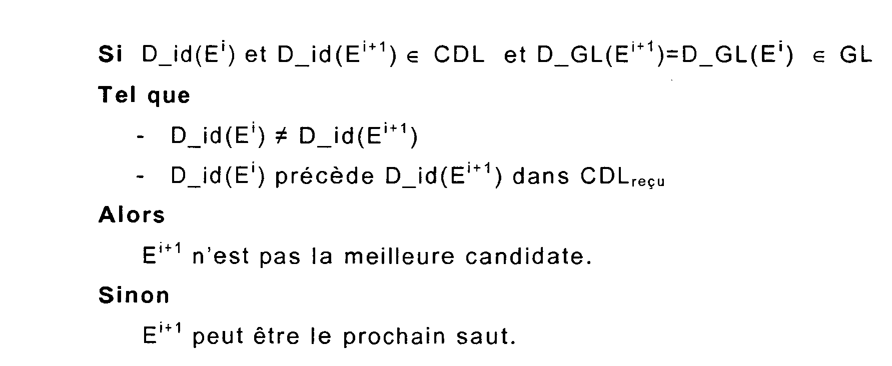 où D_id(X) et D_GL(X) désignent, respectivement, l'identifiant du domaine X et le niveau de granularité du domaine X. CDL_{reçu} est la liste des domaines successivement traversés par la requête de calcul de chemin.

5. Procédé selon la revendication 3 ou 4, **caractérisé en ce que** si la candidate à la prochaine entité de calcul de chemin peut être le prochain saut d'entité de calcul de chemin, la courante entité de calcul de chemin:
- fait parvenir automatiquement à la requête de calcul de chemin l'identifiant du domaine présentant ledit niveau de granularité auquel elle est associée ;
- transmet la requête au dit prochain saut d'entité de calcul de chemin.

6. Procédé selon la revendication 5, **caractérisé en ce que** l'identifiant parvenu à la requête de calcul de chemin d'un sous-domaine par rapport au niveau de granularité indiqué dans la requête de calcul de chemin comprend
- l'identifiant du domaine comprenant ce sous-domaine et ayant le niveau de granularité indiqué dans la requête; et
- l'identifiant du sous-domaine.

7. Procédé selon la revendication 5, **caractérisé en ce que** les identifiants des sous-domaines, par rapport au niveau de granularité indiqué dans la requête, contenus dans la liste des domaines présentant ledit niveau de granularité successivement traversés par la requête sont effacés lors du routage de la requête depuis leur domaine à un autre domaine de même niveau de granularité ou supérieur.

8. Procédé selon la revendication 5, **caractérisé en ce que** les identifiants des sous-domaines, par rapport au niveau de granularité indiqué dans la requête, contenus dans la liste des domaines présentant ledit niveau de granularité successivement traversés par la requête sont codés lors du routage de la requête depuis leur domaine à un autre domaine de même niveau de granularité ou supérieur.

9. Procédé selon l'une quelconque des revendications précédentes **caractérisés en ce que** l'architecture d'entités de calcul de chemin est une architecture PCE.

10. Procédé selon l'une quelconque des revendications précédentes **caractérisés en ce que**
- l'entité (E) de calcul de chemin est un PCE ;
- le protocole de communication est le protocole PCEP ;
- le requérant (R) de calcul de chemin est un PCC.

11. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 10.

## Patentansprüche

1. Verfahren zur Prävention und Vermeidung von Schleifen zwischen Domains in einer Vielzahl von Domains, welche eine Pfadberechnungsentitäten-Architektur mit mindestens einer Pfadberechnungsentität (E) pro Domain (D) und mindestens einem Pfadberechnungsanforderer (R), welcher einer der besagten Domains (D) angehört und mittels einer Pfadberechnungsanforderung die Verbindung zu einem Ziel innerhalb der besagten Domains (D) beantragt, unterstützen, wobei der besagte Pfadberechnungsanforderer und die besagten Pfadberechnungsentitäten (E) über mindestens ein Protokoll, welches die besagte Anforderung definiert, miteinander kommunizieren, wobei dieses Verfahren **dadurch gekennzeichnet ist, dass** eine Pfadberechnungsentität (E), aktuelle Entität genannt:
- eine Pfadberechnungsanforderung mit einer Information, welche durch die Angabe einer Granularitätsebene der besagten Domains ein Kriterium für die Erfassung von Schleifen zwischen Domains spezifiziert, und eine Information, welche eine Liste von Domains, die die besagte Granularitätsebene aufweisen und von der Anforderung durchquert werden, spezifiziert, empfängt;
- in Abhängigkeit von dem besagten Kriterium für die Erfassung von Schleifen zwischen Domains und von der besagten Liste der Domains eine nächste Pfadberechnungsentität (E) auswählt, an welche die besagte Anforderung zu übertragen ist, um jegliche Wiederholung einer Folge von Domains der besagten Liste, welche die besagte Granularitätsebene aufweisen, zu verhindern.

2. Verfahren nach Anspruch 1, **dadurch gekennzeichnet, dass** die Granularitätsebene eine normierte Netzwerkeinheit vom Typ autonomes System oder ein Bereich ist.

3. Verfahren nach einem beliebigen der vorstehenden Ansprüche, **dadurch gekennzeichnet, dass** der Schritt des Auswählens der nächsten Entität die folgenden Tests umfasst:
Wenn
i. die Kennung der Domain, mit welcher die aktuelle Pfadberechnungsentität (E) assoziiert ist, und die Kennung der Domain, mit welcher die Kandidatin für die nächste Pfadberechnungsentität (E) assoziiert ist, in der Liste der nacheinander durchquerten Domains enthalten sind; und
**ii.** die Domain, mit welcher die aktuelle Pfadberechnungsentität (E) assoziiert ist, und die Domain, mit welcher die Kandidatin der nächsten Pfadberechnungseinheit (E) assoziiert ist, die besagte Granularitätsebene aufweisen;
**So dass**
**a.** sich die Kennung der Domain, mit welcher die aktuelle
Pfadberechnungsentität (E) assoziiert ist, von der Kennung der Domain, mit welcher die Kandidatin für die nächste Pfadberechnungsentität assoziiert ist, unterscheidet; und
**b.** die Kennung der Domain, mit welcher die aktuelle Pfadberechnungsentität assoziiert ist, in der Liste der nacheinander durchquerten Domains der Kennung der Domain, mit welcher die Kandidatin für die nächste Pfadberechnungsentität assoziiert ist, vorangeht,
**Dann** diese Kandidatin für die nächste Pfadberechnungsentität nicht der
beste nächste Pfadberechnungsentitätssprung ist,
**Anderenfalls** diese Kandidatin für die nächste Pfadberechnungsentität der
nächste Pfadberechnungsentitätssprung sein kann.

4. Verfahren nach einem beliebigen der vorstehenden Ansprüche, **dadurch gekennzeichnet, dass** der Schritt des Auswählens der nächsten Entität die folgenden Tests umfasst: 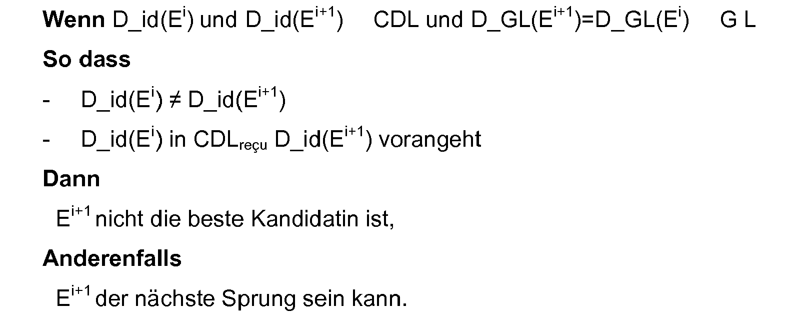 wobei D_id(X) und D_GL(X) jeweils die Kennung der Domain X und die Granularitätsebene der Domain X bezeichnen und CDL_{reçu} die Liste der von der Pfadberechnungsanforderung nacheinander durchquerten Domains ist.

5. Verfahren nach Anspruch 3 oder 4, **dadurch gekennzeichnet, dass**, wenn die Kandidatin für die nächste Pfadberechnungsentität der nächste Pfadberechnungsentitätssprung sein kann, die aktuelle Pfadberechnungsentität
- der Pfadberechnungsanforderung automatisch die Kennung der Domain, welche die besagte Granularitätsebene aufweist, mit welcher sie assoziiert ist, zukommen lässt;
- die Anforderung an den besagten nächsten Pfadberechnungsentitätssprung überträgt.

6. Verfahren nach Anspruch 5, **dadurch gekennzeichnet, dass** die der Pfadberechnungsanforderung einer Unter-Domain in Bezug auf die in der Pfadberechnungsanforderung angegebene Granularitätsebene übertragene Kennung umfasst:
- die Kennung der Domain, welche diese Unter-Domain umfasst und die in der Anforderung angegebene Granularitätsebene aufweist; und
- die Kennung der Unter-Domain.

7. Verfahren nach Anspruch 5, **dadurch gekennzeichnet, dass** die Kennungen der Unter-Domains, in Bezug auf die in der Anforderung angegebene Granularitätsebene, die in der Liste der von der Anforderung nacheinander durchquerten Domains, welche die besagte Granularitätsebene aufweisen, enthalten sind, während des Routens der Anforderung von deren Domain an eine andere Domain mit derselben oder einer höheren Granularitätsebene gelöscht werden.

8. Verfahren nach Anspruch 5, **dadurch gekennzeichnet, dass** die Kennungen der Unter-Domains, in Bezug auf die in der Anforderung angegebene Granularitätsebene, die in der Liste der von der Anforderung nacheinander durchquerten Domains, welche die besagte Granularitätsebene aufweisen, enthalten sind, während des Routens der Anforderung von deren Domain an eine andere Domain mit derselben oder einer höheren Granularitätsebene codiert werden.

9. Verfahren nach einem beliebigen der vorstehenden Ansprüche, **dadurch gekennzeichnet, dass** die Architektur der Pfadberechnungsentitäten eine PCE-Architektur ist.

10. Verfahren nach einem beliebigen der vorstehenden Ansprüche, **dadurch gekennzeichnet, dass**
- die Pfadberechnungsentität (E) ein PCE ist;
- das Kommunikationsprotokoll das PCEP-Protokoll ist;
- der Pfadberechnungsanforderer (R) ein PCC ist.

11. Auf einem Speichermedium implementiertes Computerprogramm-Produkt, welches innerhalb einer Datenverarbeitungseinheit eingesetzt werden kann und Befehle für die Durchführung eines Verfahrens gemäß einem der Ansprüche 1 bis 10 enthält.

## Claims

1. A method for preventing and avoiding inter-domain loops in a plurality of domains supporting a path-computing entity architecture including at least one path-computing entity (E) per domain (D) and at least one path-computing requester (R) belonging to one of said domains (D) and requesting, by means of a path-computing request, connection to a destination within said domains (D), said path-computing requester and said path-computing entities (E) communicating with one another by means of a protocol defining said request, which method is **characterized in that** one path-computing entity (E), known as the current entity:
- receives a path-computing request comprising information specifying an inter-domain loop detection criterion, indicating a level of granularity of said domains and information specifying a list of domains having said level of granularity successively traversed by the request;
- selects a first path-computing entity (E) to which said request must be transmitted based on said inter-domain loop detection criterion and on said list of domains, in such a way as to prevent any repetition of a sequence of domains having said level of granularity in said list.

2. A method according to claim 1, **characterized in that** the level of granularity is a standardized network of the type that is an autonomous system or an area.

3. A method according to any one of the preceding claims, **characterized in that** the step of selecting the next entity comprises the following tests:
**If**
**i.** the identifier of the domain with which the current path-computing entity (E) is associated and the identifier of the domain with which the candidate for the next path-computing entity (E) is associated are on a list of domains successively traversed; and
**ii.** the domain with which the current path-computing entity (E) is associated and the domain with which the candidate for the next path-computing entity (E) having said level of granularity is associated;
**Such that**
**a.** the identifier of the domain with which the current path-computing
entity (E) is associated is different from the identifier of the domain with which the candidate for the next path-computing entity is associated; and
b. in the list of domains successively traversed, the identifier of the domain with which the current path-computing entity is associated precedes the identifier of the domain with which the candidate for the next path-computing entity is associated
**Then** that candidate for the next path-computing entity is not the best next path-computing entity hop.
**Otherwise** that candidate for the next path-computing entity may be the next
path-computing entity hop.

4. A method according to any one of the preceding claims, **characterized in that** the step of selecting the next entity comprises the following tests: 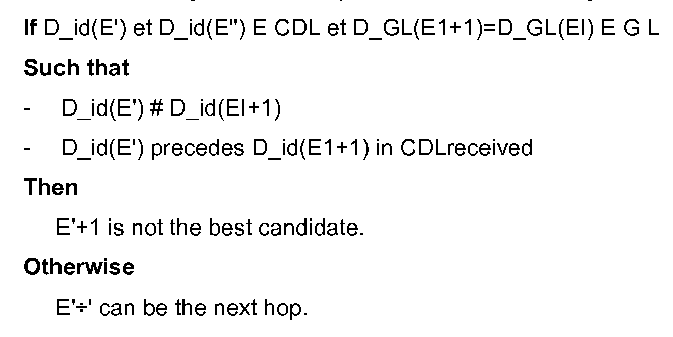 where D_id(X) and D_GL(X) respectively designate the identifier of domain X and the level of granularity of domain X. CDLreceived is the list of domains successively traversed by the path-computing request.

5. A method according to claim 3 or 4, **characterized in that** if the candidate for the next path-computing entity may be the next path-computing entity hop, the current path-computing entity
- automatically forwards to the path-computing request the identifier of the domain having the level of granularity with which it is associated;
- transmits the request to said next path-computing entity hop.

6. A method according to claim 5, **characterized in that** the identifier forwarded to the path-computing request of a sub-domain relative to the level of granularity indicated in the path-computing request comprises
- the identifier of the domain comprising that subdomain and having the level of granularity indicated in the request; and
- the identifier of the subdomain.

7. A method according to claim 5, **characterized in that** the identifiers of the subdomains, relative to the level of granularity indicated in the request, contained in the list of domains having said level of granularity successively traversed by the request are erased when the request is routed from their domain to another domain with the same level of granularity or higher.

8. A method according to claim 5, **characterized in that** the identifiers of the subdomains, relative to the level of granularity indicated in the request, contained in the list of domains having said level of granularity successively traversed by the request are encoded when the request is routed from their domain to another domain with the same level of granularity or higher.

9. A method according to any one of the preceding claims, **characterized in that** the path-computing entity architecture is a PCE architecture.

10. A method according to any one of the preceding claims, **characterized in that**
- the path-computing entity (E) is a PCE;
- the communication protocol is the PCEP protocol;
- the path-computing requester (E) is a PCC.

11. A computer program product implemented on a memory medium, which may be implemented within a computer processing unit, and comprises instructions to implement a method according to one of the claims 1 to 10.
